# EUROPÄISCHE PATENTANMELDUNG

(11) **EP 0 697 434 A1**
(43) Veröffentlichungstag der Anmeldung: **21.02.1996**
(21) Anmeldenummer: 95112260.5
(22) Anmeldetag: 04.08.1995
(51) Int. Cl.: C08K 9/04

(54) **Elektrisch leitfähige thermoplastische Verbundwerkstoffe und Verfahren zu ihrer Herstellung**

(30) Priorität: 16.08.1994 DE 4429028
(71) Anmelder: HOECHST AKTIENGESELLSCHAFT, D-65929 Frankfurt am Main (DE)
(72) Erfinder: Pfeiffer, Bernhard, Dr., D-65779 Kelkheim (DE); Heydweiller, Joachim, D-65428 Rüsselsheim (DE); Risch, Josefa, D-65835 Liederbach (DE)

(57) **Zusammenfassung**

Die Erfindung betrifft elektrisch leitfähige thermoplastische Verbundwerkstoffe, die dadurch gekennzeichnet sind, daß sie spezifische Durchgangswiderstände unter 10⁹ Ohm cm aufweisen und 0,1 bis 70 Vol.-% elektrisch leitende Fasern enthalten, die mit einem thermoplastischen Elastomer imprägniert sind, ein Verfahren zu ihrer Herstellung sowie ihre Verwendung.

## Beschreibung

Die Erfindung betrifft elektrisch leitfähige thermoplastische Verbundwerkstoffe, die elektrisch leitende Fasern enthalten, ein Verfahren zu ihrer Herstellung und ihre Verwendung.

Für eine Vielzahl von Anwendungen ist es erforderlich, elastische, weiche leitfähige Kunststoffe einzusetzen. Hierzu wurden verschiedene Kautschuke (Silikonkautschuk usw.) oder ähnliche Systeme mit Ruß modifiziert. Bei diesen Kautschuken handelt es sich um duromere Systeme, die thermoplastisch nicht verarbeitet werden können. Zudem weisen die erhaltenen elastischen Kunststoffe den Nachteil auf, daß sie schwarz sind und bei vernünftigen Füllgraden nur eine geringe Leitfähigkeit aufweisen. Daneben ist es auch bekannt, leitende Fasern, vor allem Stahlfasern in einem Schmelz-Pultrusions-Verfahren mit Thermoplasten zu imprägnieren (US-Reissue 32772; EP-A 0 579 047). Bei einer anschließenden Verarbeitung der Halbzeuge zu Funktionsbauteilen (z.B. mittels Spritzguß, Extrusion oder Blasformen) bilden die Fasern ein leitfähiges Netzwerk, welches dem Kunststoff eine hohe elektrische Leitfähigkeit und damit eine Abschirmung elektromagnetischer Wellen verleiht. Hauptzweck dieser faserverstärkten Thermoplaste ist jedoch die Erzeugung der elektrischen Leitfähigkeit bei Erhalt der mechanischen Eigenschaften wie hohe Festigkeit und Steifigkeit.

Der Erfindung liegt die Aufgabe zugrunde, elektrisch leitfähige, elastische Thermoplaste und ein Verfahren zu ihrer Herstellung zu entwickeln.

Es wurden nun elektrisch leitfähige thermoplastische Verbundwerkstoffe gefunden, die dadurch gekennzeichnet sind, daß sie spezifische Durchgangswiderstände unter 10⁹ Ohm cm aufweisen und 0,1 bis 70 Vol.-% elektrisch leitende Fasern enthalten, die mit einem thermoplastischen Elastomer imprägniert sind.

Als thermoplastische Elastomere können alle Polymere eingesetzt werden, die Kautschuk-elastisches Verhalten zeigen, in der Wärme erweichen und reversibel durch Abkühlen wieder zu einem flexiblen Körper erstarren, insbesondere Polystyrol-Elastomere (TPS), Elastomere auf der Basis Polyurethan (TPU), Polyester (TPE-E), Polyamid (TPA), olefinische Thermoplast-Elastomer Blends (TPO), PP-EPDM Blends (mit einem Elastomeranteil von mehr als 70 Gew.-%) und schlagzäh-modifizierte Thermoplaste mit weniger als 70 Gew.-% Elastomeranteil. Darüber hinaus ist es auch möglich, 5-95 Vol-% des thermoplastischen Elastomers durch nicht-elastomere Thermoplaste zu ersetzen. Die elektrisch leitenden Fasern können hochwertige Edelstahlfasern sein, aber auch andere Metallfasern, z.B. aus Eisen, Stahl, Kupfer, Aluminium, Nickel. Auch der Einsatz von metallisierten Glas- oder Kohlefasern ist möglich. Wegen ihrer Leitfähigkeit können Kohlefasern auch ohne Modifizierung eingesetzt werden.

Zur Herstellung der erfindungsgemäßen leitfähigen thermoplastischen Verbundwerkstoffe werden Stränge aus elektrisch leitenden Fasern parallel angeordnet, aufgespreizt und durch Schmelzpultrusion mit einem aufgeschmolzenen thermoplastischen Elastomer imprägniert. Dabei werden die Stränge durch die Elastomerschmelze gezogen und das Verhältnis Fasern/Schmelze so eingestellt, daß 0,1 bis 70 Vol.-%, vorzugsweise 5 bis 20 Vol.-%, elektrisch leitender Fasern eingearbeitet werden. Die imprägnierten Stränge werden granuliert und gegebenenfalls mit einem thermoplastischen Elastomer-Granulat gemischt und so der Fasergehalt eingestellt.

Erstaunlicherweise konnte sogar eine Vielzahl elektrisch leitender Faserstränge mit Einzelfilament-Durchmessern von 1 bis 20 µm nach paralleler Anordnung und Aufspreizung der Stränge mit einem aufgeschmolzenen, thermoplastischen Elastomer in einem Schmelz-Pultrusionsverfahren sehr gut imprägniert werden.

Es ist von Vorteil, daß das Verfahren hohe Imprägniergeschwindigkeiten von 3 bis 40 m/min., bevorzugt jedoch 5 bis 20 m/min gestattet.

Das imprägnierte Fadenband kann endlos auf Spulen aufgewickelt oder mit einer Schneidevorrichtung (Stranggranulator) geschnitten werden. Im Gegensatz zu herkömmlichem Kurzfasermaterial (es können nur Faserlängen unter 0,5 mm imprägniert werden), bei dem Schnittfasern in die Schmelze eincompoundiert werden, entspricht beim erfindungsgemäß hergestellten Material die Faserlänge der Granulatlänge und liegt über 0,5 mm, bevorzugt zwischen 3 und 20 mm, besonders bevorzugt zwischen 5 und 15 mm.

Vorzugsweise wird ein Granulat mit einem Fasergehalt von 0,1 bis 70 Vol.-% hergestellt. Dieses Konzentrat wird zur Verarbeitung auf Fasergehalte von 0,1 bis 30 Vol.-%, vorzugsweise 0,1 - 15 Vol.-% verdünnt. Die Blendkomponente kann aus dem gleichen Material wie das Matrixpolymer oder einem anderen Thermoplast bestehen. Handelt es sich bei der Blendkomponente z.B. um Polypropylen (PP), Polyamid (PA), Polybutylen-terephthalat (PBT), Acrylnitril-Butadien-Styrol-Polymer (ABS), Polycarbonat (PC) oder ähnliche Thermoplaste, so dient die Matrix des Konzentrats zusätzlich als Schlagzähmodifizierer. Daneben kann die Blendkomponente kurz- oder langfaserverstärkt sein, wodurch die Steifigkeit und Festigkeit erhöht werden. Bei der langfaserverstärkten Blendkomponente kann es sich um ein Pultrusionsprodukt handeln. Ferner kann die Blendkomponente auch ein nichtelastomeres Thermoplast-Granulat sein. Erstaunlicherweise wird durch den Zusatz einer mit nichtleitenden Fasern oder anderen nichtleitenden Füllstoffen verstärkten Blendkomponente die Leitfähigkeit erhöht.

Die hergestellten Halbzeuge können anschließend mit herkömmlichen Verarbeitungstechnologien wie Spritzguß, Plastifizieren/Pressen, Blasformen, Extrudieren usw. zu Funktionsbauteilen verarbeitet werden.

Es ist bekannt, daß nicht-elastomere Thermoplaste durch Einarbeiten geringer Mengen leitfähiger Fasern elektrisch leitfähig werden. Es war jedoch unerwartet, daß die Fasern bei der Verarbeitung zu Funktionsbauteilen sich auch in einem Elastomer homogen verteilen und ein Leitfähigkeits-Netzwerk ausbilden würden.

Formkörper, die aus den erfindungsgemäßen Verbundwerkstoffen gefertigt waren, behielten nach dem Erstarren bei mechanischer Verformung ihre hohe Leitfähigkeit bei. Der Grund dafür ist vielleicht, daß zum einen die Stahlfasern duktil sind und so mit einer Verformung mitgehen können, zum anderen die Einbettung in der Matrix so fest ist, daß ein Faser-pull-out nicht stattfindet. Daneben ist das Netzwerk, welches von den langen Fasern gebildet wird, wesentlich weniger anfällig, da weniger Faserenden vorhanden sind, die getrennt werden können.

Besonders vorteilhaft können die Formkörper dort eingesetzt werden, wo rußgefüllte Systeme wegen ihrer schlechten mechanischen und elektrischen Eigenschaften oder der Eigenfarbe (z.B. Striche von Stuhlrollen auf hellem Fußbodenbelag) nicht eingesetzt werden können. Hierzu gehören Anwendungen im ESD- und EMV-Bereich wie leitende Fußmatten, Gleitrollen, insbesondere Stuhlrollen, Schuhsohlen, leitfähige Dichtungen und Dichtlippen. Daneben können flexible Widerstands-Heizelemente hergestellt werden.

Die Erfindung wird durch die nachfolgenden Ausführungsbeispiele näher erläutert.

### Beispiel 1:

In einem Schmelz-Pultrusionsverfahren wurde ein Stahlfaserstrang mit 9.000 tex, ca. 10.000 Einzelfilamenten und einem Einzelfilamentdurchmesser von ca. 10 µm mit einer Schmelze eines thermoplastischen Elastomers auf der Basis eines Polyurethans (TPU, MFI 21 kg, 190°C = 10-30 g/m) imprägniert. Vor dem Einlauf in das Werkzeug wurde der Faserstrang durch eine Faservorspannung von ca. 100 N und Leiten über beheizte Spannstäbe aufgespreizt. Die Faser wurde mit einer Abzugsgeschwindigkeit von 5 m/min durch das Imprägnierwerkzeug geführt und der erkaltete Faserstrang über einen Stranggranulator auf eine Faserlänge von 10 mm geschnitten. Der Gehalt der Stahlfaser wurde auf 50 Gew.-% (= 10 Vol.-%) eingestellt.
Das Konzentrat wurde mit einem Polyurethan gleicher Viskosität wie das Matrixpolymer des Konzentrates auf einen Stahlfasergehalt von 10 Gew.-% verdünnt (1 Teil Konzentrat wurde mit 4 Teilen TPU vermischt). Das Blend wurde auf einer Spritzgußmaschine zu Probeplatten mit den Abmessungen 80 x 80 x 2 mm verarbeitet. An den Probeplatten wurde die spezifische Oberflächen- und Durchgangsleitfähigkeit nach DIN/VDE 0303 Teil 30 gemessen (Tabelle 1).

**Tab. 1**

| Widerstandsmessungen nach DIN/VDE 0303 Teil 30 | | |
|---|---|---|
| Thermoplast | SF/Gew.-% | spez. Durchgangswiderstand k Ohm cm |
| TPU-SF 10 | 10 | 1.900 |

| | | spez. Oberflächenwiderstand k Ohm cm |
|---|---|---|
| TPU-SF 10 | 10 | 38 |

Der Kern der Probeplatten besitzt in Spritzrichtung (Längs-Orientierung der Fasern beim Spritzguß) einen spezifischen Widerstand von ca. 0,5 Ohm cm (Kontaktierung über selbstschneidende Schrauben).

### Beispiel 2:

Aus dem Probeplatten gem. Beispiel 1 wurden 1 cm breite und 8 cm lange Streifen abgeschnitten und mit einer Spannungsquelle (Kontaktierung über selbstschneidende Schrauben, die in die Streifen eingedreht wurden) auf über 65 °C erhitzt:

| | |
|---|---|
| Abstand der Kontakte: | 7 cm |
| Spannung: | 8-12 V |
| Strom (konstant gehalten): | 0,4 A |
| Erzielte Temperatur: | 65-100°C |

Das Heizelement wurde über ca. 10 Stunden betrieben.

## Patentansprüche

1. Elektrisch leitfähige thermoplastische Verbundwerkstoffe, dadurch gekennzeichnet, daß sie spezifische Durchgangswiderstände unter 10⁹ Ohm cm aufweisen und 0,1 bis 70 Vol.-% elektrisch leitende Fasern enthalten, die mit einem thermoplastischen Elastomer imprägniert sind.

2. Verbundwerkstoffe gemäß Anspruch 1, dadurch gekennzeichnet, daß sie aus elektrisch leitenden Fasern und thermoplastischem Elastomer bestehen.

3. Verbundwerkstoffe gemäß Anspruch 1, dadurch gekennzeichnet, daß 5 bis 95 Vol.-% des thermoplastischen Elastomers durch nicht-elastomere Thermoplaste ersetzt sind.

4. Verbundwerkstoffe gemäß Anspruch 1, dadurch gekennzeichnet, daß die elektrisch leitenden Fasern einen Faserdurchmesser von 1 bis 100 µm und ein Längen/Durchmesser-Verhältnis über 500 aufweisen.

5. Verbundwerkstoffe gemäß Anspruch 1, dadurch gekennzeichnet, daß die elektrisch leitenden Fasern aus Metallfasern, insbesondere Stahlfasern bestehen.

6. Verbundwerkstoffe gemäß Anspruch 1, dadurch gekennzeichnet, daß die elektrisch leitenden Fasern aus metallisierten Glasfasern oder aus Kohlenstoffasern bestehen.

7. Verbundwerkstoffe gemäß Anspruch 1, dadurch gekennzeichnet, daß sie frei sind von Leit-Ruß.

8. Verfahren zur Herstellung von elektrisch leitfähigen thermoplastischen Verbundwerkstoffen gemäß Anspruch 1 oder 2, dadurch gekennzeichnet, daß man Stränge aus elektrisch leitenden Fasern parallel anordnet, aufspreizt und durch Schmelzpultrusion mit einem aufgeschmolzenen thermoplastischen Elastomer imprägniert, wobei man die Stränge durch die Elastomerschmelze zieht und das Verhältnis Faser/Schmelze so einstellt, daß 0.1 bis 70 Vol.-%, bevorzugt 5 bis 20 Vol.-%, elektrisch leitende Fasern eingearbeitet werden, man die imprägnierten Stränge granuliert und gegebenenfalls mit einem thermoplastischen Elastomer-Granulat mischt und so den Fasergehalt einstellt.

9. Verfahren zur Herstellung von elektrisch leitfähigen thermoplastischen Verbundwerkstoffen gemäß Anspruch 3, dadurch gekennzeichnet, daß man Stränge aus elektrisch leitenden Fasern parallel anordnet, aufspreizt und durch Schmelzpultrusion mit einem aufgeschmolzenen thermoplastischen Elastomer imprägniert, wobei man die Stränge durch die Elastomerschmelze zieht und das Verhältnis Faser/Schmelze so einstellt, daß 0.1 bis 70 Vol.-%, bevorzugt 5 bis 20 Vol.-%, elektrisch leitende Fasern eingearbeitet werden, man die imprägnierten Stränge granuliert und mit einem nicht-elastomeren Thermoplast-Granulat mischt und so den Fasergehalt einstellt.

10. Verfahren nach Anspruch 8 oder 9, dadurch gekennzeichnet, daß man in der Mischung einen Gehalt elektrisch leitender Fasern von 0,1 bis 15 Vol.-% einstellt.

11. Verfahren nach Anspruch 8 oder 9, dadurch gekennzeichnet, daß man die Stränge bei der Schmelz-Pultrusion mit einer Geschwindigkeit von 3 bis 40 m/min durch die Elastomerschmelze zieht.

12. Verfahren nach Anspruch 8, dadurch gekennzeichnet, daß man zum Einstellen des Fasergehalts und bei der Schmelzpultrusion das gleiche thermoplastische Elastomer verwendet.

13. Verfahren nach Anspruch 8 oder 9, dadurch gekennzeichnet, daß man zum Einstellen des Fasergehalts einen kurzglasfaserverstärkten Thermoplast verwendet.

14. Verfahren nach Anspruch 8 oder 9, dadurch gekennzeichnet, daß man zum Einstellen des Fasergehalts einen langglasfaserverstärkten Thermoplast verwendet.

15. Verfahren gemäß Anspruch 8 oder 9, dadurch gekennzeichnet, daß die imprägnierten Faserstränge auf eine Länge von 3 bis 20 mm, insbesondere 5 bis 15 mm granuliert werden.

16. Verfahren zur Herstellung von elektrisch leitfähigen thermoplastischen Verbundwerkstoffen gemäß Anspruch 2, dadurch gekennzeichnet, daß man Stränge aus elektrisch leitenden Fasern parallel anordnet, aufspreizt und durch Schmelzpultrusion mit einem aufgeschmolzenen thermoplastischen Elastomer imprägniert, wobei man die Stränge durch die Elastomerschmelze zieht und das Verhältnis Faser/Schmelze so einstellt, daß 0.1 bis 70 Vol.-% elektrisch leitende Fasern eingearbeitet werden und man die imprägnierten Stränge auf Spulen aufwickelt.

17. Verwendung eines Verbundwerkstoffes gemäß Anspruch 1 zur Herstellung von Gleitrollen.

18. Verwendung eines Verbundwerkstoffes gemäß Anspruch 1 zur Herstellung von Dichtlippen.
